# EUROPEAN PATENT SPECIFICATION

(11) **EP 3 660 689 B1**
(45) Date of publication and mention of the grant of the patent: **31.03.2021**
(21) Application number: 18839455.5
(22) Date of filing: 28.05.2018
(51) Int. Cl.: G06F 13/00, H04L 12/28

(54) **LOG ACQUISITION DEVICE, COMMUNICATION MODULE, LOG ACQUISITION SYSTEM, AND LOG ACQUISITION METHOD**
LOG-ERFASSUNGSVORRICHTUNG, KOMMUNIKATIONSMODUL, LOG-ERFASSUNGSSYSTEM UND LOG-ERFASSUNGSVERFAHREN
DISPOSITIF D'ACQUISITION DE JOURNAL, MODULE DE COMMUNICATION, SYSTÈME D'ACQUISITION DE JOURNAL ET PROCÉDÉ D'ACQUISITION DE JOURNAL

(30) Priority: 24.07.2017 JP 2017142638; 03.04.2018 JP 2018071741
(43) Date of publication of application: 03.06.2020
(73) Proprietor: Panasonic Intellectual Property Management Co., Ltd., Osaka-shi, Osaka 540-6207 (JP)
(72) Inventor: SASAKI Ayumi, Osaka 540-6207 (JP); NAKAMURA Koji, Osaka 540-6207 (JP); MATSUMOTO Michihiro, Osaka 540-6207 (JP); MORISHITA Tatsuya, Osaka 540-6207 (JP)
(74) Representative: Grünecker Patent- und Rechtsanwälte PartG mbB
(86) International application number: PCT/JP2018/020253
(87) International publication number: WO 2019/021612

(56) References cited:
- EP-A1- 3 171 550
- JP-A- 2003 296 135
- JP-A- 2016 110 280
- US-A1- 2017 146 969

## Description

### TECHNICAL FIELD

The present disclosure relates to a log acquisition device that is network-connected to a plurality of electric instruments installed in a house, a store, a factory or the like through communication modules to collect logs in which operation states and the like of the respective electric instruments are recorded. The present disclosure further relates to a communication module, a log acquisition system, and a log acquisition method.

### BACKGROUND ART

In recent years, there has been provided a service to remotely control electric instruments for home use, such as an air conditioner, a microwave oven, a refrigerator, and the like, with a portable terminal, the electric instruments being connected to a network.

In the above-described communication system that controls the electric instruments installed in a house, power control and operation control of the electric instruments are enabled by remote control from the portable terminal. Moreover, operation of each of the electric instruments as a result from the control of the relevant electric instrument by a user is accumulated and saved as a log, and this enables the same log to be analyzed. Thereby, an optimal utilization method of the electric instruments is expected to be proposed to the user.

PTL 1 has described a technique in which in a system that performs control of electric instruments, a time when a log is notified to a server device is distributed to avoid concentration of communication.

Patent application publication EP 3 171 550 A1 relates to a message reception device and screen transition method. The message reception device includes a communication unit configured to receive message information from a device linkage server, and an application-transition-screen generator configured to extract display button information corresponding to a service ID included in the message information from application transition information having the service ID, display button information, and transition destination information corresponding to each other, and configured to generate a notification screen including display button corresponding to the display button information and notification message corresponding to the message information included in the message information. The message reception device further includes a screen output unit configured to output the notification screen, and an application-start instructor that makes the notification screen transit to an application screen on which an application prescribed by the transition destination information corresponding to the display button information starts, or to a function screen prescribed by the transition destination information corresponding to the display button information, based on the application transition information, when a display button is selected on the notification screen.

Patent application publication US 2017/146969 A1 relates to a server apparatus, control system and control method. The server apparatus includes a terminal-side receiver for receiving, via a first network, information including appliance information that identifies an electric appliance, from a terminal apparatus operable by a user, an appliance-side receiver for receiving, via a second network, information including an identifier of the electric appliance and information about a state of the electric appliance, and a storage unit that stores the appliance information received by the terminal-side receiver and the identifier of the electric appliance, for which it is judged, from the information about the state of the electric appliance received by the appliance-side receiver, that the appliance state has been changed, in association with each other, upon reception of trigger information by the terminal-side receiver.

### Citation List

### Patent Literature

PTL 1: Unexamined Japanese Patent Publication No. 2009-48571

### SUMMARY OF THE INVENTION

However, the technique described in PTL 1 has a problem that a notification period or log information to be notified cannot be changed based on a model of each of the electric instruments, and thus, a service of acquiring the logs of a plurality of types of electric instruments in a lump cannot be dealt with.

This problem is solved by the present invention as claimed in the appended independent claims. Particular embodiments of the present invention are defined by the appended dependent claims.

In order to solve the above-described conventional problem, a log acquisition device of the present disclosure that is connected to a plurality of electric instruments through a network, and acquires logs of the electric instruments, the log acquisition device includes: an individual identification information acquiring part that acquires individual identification information for identifying an individual of an object instrument as any one of the plurality of electric instruments; a notification period decision part that decides a notification period as a period when each of the logs of the object instrument is notified, based on commodity information associated with the individual identification information; a start time decision part that decides a notification start time as information indicating a time when a notification of the log of the object instrument starts so that transmission timing of the logs of the respective electric instruments is levelled, based on the notification period, and the notification start time and the notification period of the electric instrument already decided; a setting transmitter that transmits notification setting information including the notification start time decided and the notification period decided, based on the individual identification information; and a log acquisition part that acquires the log of the electric instrument to be notified in accordance with the notification start time and the notification period included in the notification setting information.

According to the present disclosure, the notification start time and the notification period are decided as the notification setting information for each of the electric instruments. Conformation of the communication module to the notification setting information allows the transmission timing of the logs to the log acquisition device to be effectively levelled.

The scope of the present invention is defined by the appended claims. Embodiments and/or examples mentioned in the following description that do not fall under the scope of the appended claims are to be construed as comparative examples useful for understanding the present invention.

### BRIEF DESCRIPTION OF DRAWINGS

FIG. 1 is a schematic configuration diagram showing a log acquisition system in an exemplary embodiment.
FIG. 2 is a block diagram showing main components of an electric instrument in the exemplary embodiment.
FIG. 3 is a block diagram showing main components of a communication module in the exemplary embodiment.
FIG. 4 is a block diagram showing main components of a log acquisition device in the exemplary embodiment.
FIG. 5 is a block diagram showing main components of a terminal device in the exemplary embodiment.
FIG. 6 is a diagram showing operation of respective functional blocks of the electric instrument in the exemplary embodiment.
FIG. 7 is a diagram showing operation of respective functional blocks of the communication module in the exemplary embodiment.
FIG. 8 is a diagram showing operation of respective functional blocks of the log acquisition device in the exemplary embodiment.
FIG. 9 is a diagram showing a specific example of a commodity list made of log information linked to commodity information in the exemplary embodiment.
FIG. 10 is a diagram schematically showing distribution of transmission timing of a plurality of the electric instruments calculated from a notification setting list in the exemplary embodiment.
FIG. 11 is a diagram showing the registered notification setting list in the exemplary embodiment.
FIG. 12 is a diagram showing the updated notification setting list in the exemplary embodiment.
FIG. 13 is a diagram showing operation of respective functional blocks of the terminal device in the exemplary embodiment.
FIG. 14 is a flowchart showing a flow of processing for performing registration of notification setting information in the communication module in the exemplary embodiment.
FIG. 15 is a flowchart showing a flow of processing in which the communication module in the exemplary embodiment notifies the log acquisition device of a log.

### DESCRIPTION OF EMBODIMENT

Next, an exemplary embodiment of a log acquisition device, a communication module, a log acquisition system, and a log acquisition method according to the present disclosure will be described with reference to the drawings. Note that the following exemplary embodiment is merely an example of the log acquisition device, the communication module, the log acquisition system, and the log acquisition method according to the present disclosure. Accordingly, the range of the present disclosure is defined by words of claims with reference to the following exemplary embodiment, and is not limited to only the following exemplary embodiment. Thus, of components in the following exemplary embodiment, components not recited in any of independent claims indicating the most generic concept of the present disclosure are not necessarily required for achieving an object of the present disclosure, and are described as components configuring a more preferable exemplary embodiment.

Moreover, the drawings are schematic views resulting from performing emphasis, omission, or adjustment of ratios as needed for describing the present disclosure, so that actual shapes, positional relations, and ratios may be different.

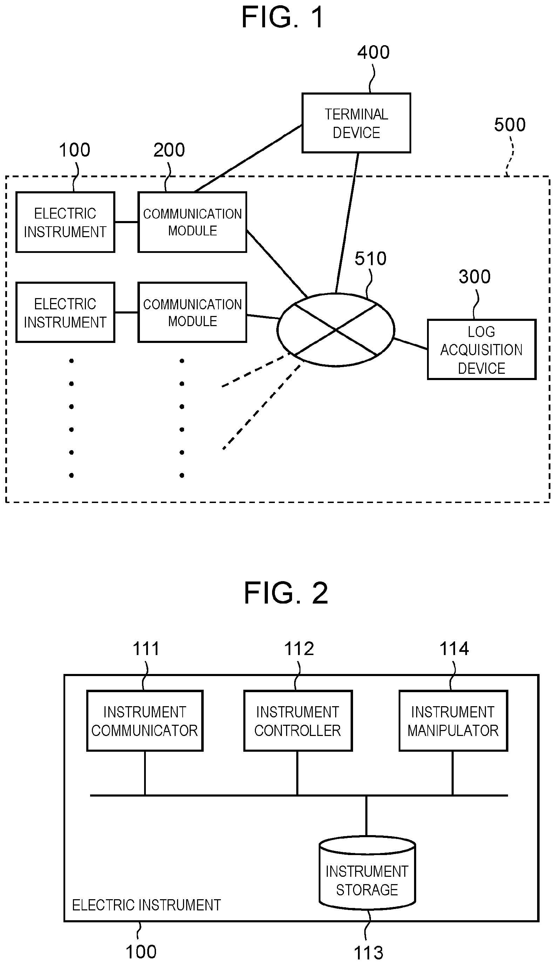

FIG. 1 is a schematic configuration diagram showing the log acquisition system in the exemplary embodiment of the present disclosure. As shown in the same figure, log acquisition system 500 includes electric instruments 100, communication modules 200, and log acquisition device 300 connected to communication modules 200 through network 510. Moreover, in the case of the present exemplary embodiment, log acquisition system 500 also functions as a remote control system that remotely manipulates electric instruments 100, and terminal device 400 may be connected in order to control electric instruments 100 and the like.

In a house, a user can remotely manipulate ON and OFF of a power source and operation control (e.g., change of temperature setting, air volume control or the like in an air conditioner) with respect to electric instrument 100, using terminal device 400. When the user executes a manipulation on terminal device 400, terminal device 400 transmits a control command to electric instrument 100 through communication module 200. Electric instrument 100 executes processing in accordance with the received control command. When the user controls electric instrument 100 from terminal device 400 in the housing, in view of security, the control command from terminal device 400 is sent to communication module 200 through a server functioning as log acquisition device 300 as well.

Log acquisition device 300 manages a list of electric instruments 100 that accept the remote control from terminal device 400. Log acquisition device 300 accepts only the control command to electric instruments 100 managed on the list among control commands from terminal device 400.

Electric instrument 100 is a so-called household electric appliance installed in the house, and is, for example, an air conditioning instrument such as an air conditioner, a freezing refrigerator, a rice cooker, a microwave oven, a washing and drying machine, or the like.

In the present exemplary embodiment, a form in which each of communication modules 200 includes a control device, and communication module 200 communicates with a control device included in electric instrument 100 will be described. However, communication module 200 and electric instrument 100 may be controlled by one control device. Moreover, while in the present exemplary embodiment, communication module 200 is connected to electric instrument 100 by wire, and power is supplied through electric instrument 100, power may be supplied from outside independently of electric instrument 100. Moreover, communication module 200 may be connected to a plurality of electric instruments 100 to communicate with respective electric instruments 100.

FIG. 2 is a block diagram showing main components of the electric instrument in the exemplary embodiment. In the same figure, electric instrument 100 includes instrument communicator 111, instrument controller 112, instrument storage 113, and instrument manipulator 114.

Instrument communicator 111 performs wired communication with communication module 200, for example, using a start-stop synchronization system serial communication (universal asynchronous receiver-transmitter (UART)). Note that a communication system between instrument communicator 111 and communication module 200 is not limited to the start-stop synchronization system serial communication (UART), and wired communication with communication module 200 may be performed in a system other than the start-stop synchronization system serial communication (UART), or wireless communication may be performed.

Instrument controller 112 controls whole electric instrument 100. Instrument controller 112 is a device including at least one of a device or the like that executes processing and a hardware circuit that executes the processing, for example, by a processor operating in accordance with commands included in a computer program stored in instrument storage 113.

Instrument storage 113 is a configuration part including a storage device that stores a program and data in a nonvolatile manner in a digital form. As the storage device, for example, a hard disk drive, a solid state drive (SSD) or the like can be exemplified, and one of these or a plurality of types may be included. This is true of module storage 213, server storage 313, and terminal storage 413 described later.

Instrument manipulator 114 is an interface that accepts input from the user, and includes an input device such as, for example, a touch panel, a manipulation button, a keyboard and the like. Note that this is true of terminal manipulator 414 described later.

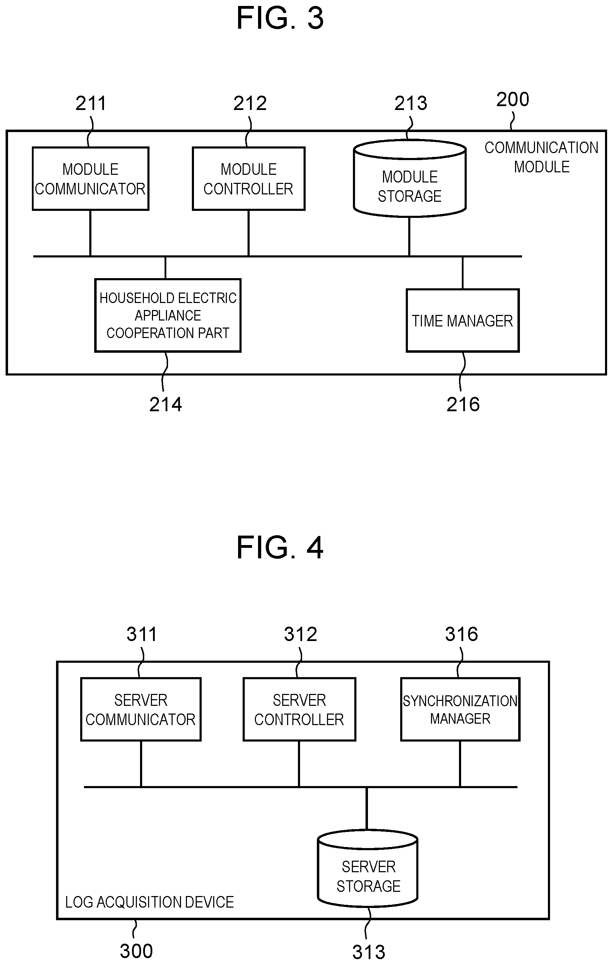

FIG. 3 is a functional block diagram showing main components of the communication module in the exemplary embodiment. In the same figure, communication module 200 includes module communicator 211, module controller 212, module storage 213, household electric appliance cooperation part 214, and time manager 216.

Module communicator 211 performs wired communication or wireless communication with terminal device 400 through a broadband router or the like installed in the house, based on a standard of Ethernet (registered trademark) or the like. Moreover, module communicator 211 performs communication with server communicator 311 (described later) of log acquisition device 300 and terminal communicator 411 (described later) of terminal device 400 through network 510 (refer to FIG. 1) such as the internet or the like. Note that a protocol for performing the communication through network 510 is not particularly limited.

Module controller 212 controls whole communication module 200 by the processor operating by a computer program saved in module storage 213.

Household electric appliance cooperation part 214 performs communication with electric instrument 100 to acquire instrument information of electric instrument 100, and acquire a log indicating a history of manipulation contents to electric instrument 100, and an operation history of electric instrument 100.

Time manager 216 is a configuration part that manages clocking of communication module 200, and periodically receives a synchronization signal in log acquisition device 300 to perform time calibration, and to thereby, perform synchronization of time with log acquisition device 300.

FIG. 4 is a functional block diagram showing main components of the log acquisition device in the exemplary embodiment. In the same figure, log acquisition device 300 includes server communicator 311, server controller 312, server storage 313, and synchronization manager 316.

Server communicator 311 is a configuration part that simultaneously performs communication with the plurality of communication modules 200 connected through network 510. Note that server communicator 311 has a fixed limitation in capability, and if communication exceeding the capability from a great number of communication modules 200 is concentrated, processing will be delayed.

Server controller 312 controls whole log acquisition device 300 by the processor operating by a computer program saved in server storage 313.

Synchronization manager 316 is a configuration part that manages clocking of log acquisition device 300. Moreover, upon accepting a synchronization signal request transmitted from communication module 200, synchronization manager 316 sends back a time held by log acquisition device 300 as the synchronization signal.

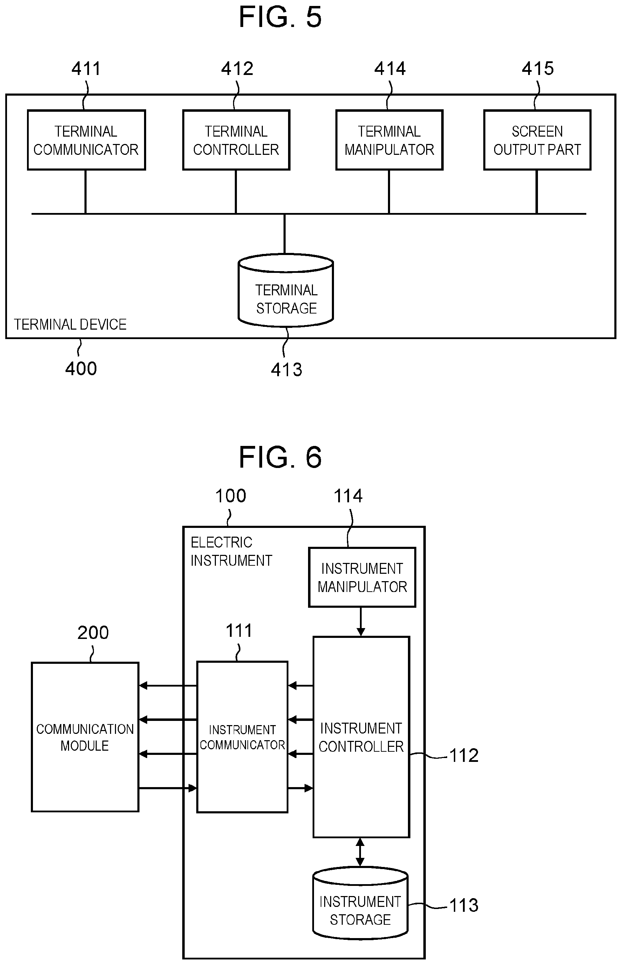

FIG. 5 is a functional block diagram showing main components of the terminal device in the exemplary embodiment. In the same figure, terminal device 400 includes terminal communicator 411, terminal controller 412, terminal storage 413, terminal manipulator 414, and screen output part 415.

Terminal communicator 411, terminal controller 412, terminal storage 413, and terminal manipulator 414 are configuration parts similar to the communicators, the controllers, the storages, and the manipulators described before.

Screen output part 415 outputs information to be displayed on a display included in terminal device 400, an external display, or the like.

With reference to FIG. 6, operation of the respective functional blocks in electric instrument 100 will be described.

When the user executes a manipulation of power activation to instrument manipulator 114 of electric instrument 100, instrument manipulator 114 senses the manipulation by the user, and outputs power activation information to instrument controller 112. When the power activation information is inputted, instrument controller 112 activates electric instrument 100.

After electric instrument 100 is activated, instrument controller 112 reads out the instrument information including individual identification information from instrument storage 113, and transmits the instrument information to communication module 200 through instrument communicator 111. Note that the instrument information may be transmitted when communication module 200 requests acquisition of the instrument information through instrument communicator 111.

The instrument information includes the individual identification information that enables each of electric instruments 100 to be uniquely identified.

In the present exemplary embodiment, the instrument information coincides with the individual identification information. Moreover, the instrument information is configured of commodity information and an individual identification number. To the instrument information may be further added information such as information that enables an individual encrypted for communication to be identified and the like. The commodity information is information that enables a type, a color of an external appearance, and the like of electric instrument 100 to be identified. The commodity information is information described, for example, in a commodity body, a catalog or the like, and is information classified systematically to some extent that allows the user to refer to.

Instrument controller 112 saves the manipulation history, the operation history and the like of electric instrument 100 as the log in instrument storage 113. The saved log is read out by instrument controller 112 and is transmitted to communication module 200 through instrument communicator 111 when the log is notified to communication module 200, or when a log notification request transmitted by communication module 200 is received. Note that when the log is notified, the instrument information functioning as the individual identification information may be added.

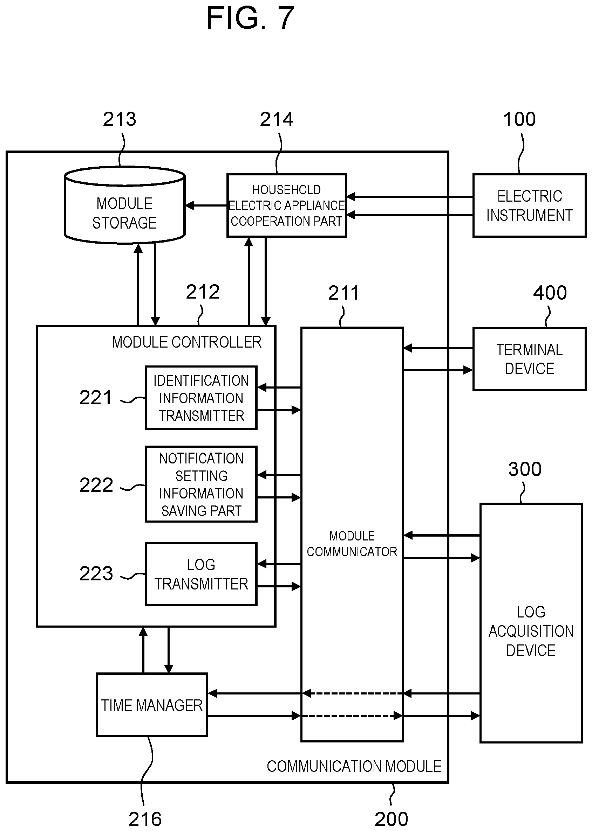

With reference to FIG. 7, operation of the respective functional blocks in communication module 200 will be described.

Household electric appliance cooperation part 214 of communication module 200 acquires the instrument information from electric instrument 100. Household electric appliance cooperation part 214 may acquire the instrument information voluntarily transmitted from electric instrument 100 after power activation. Moreover, household electric appliance cooperation part 214 may request the acquisition of the instrument information to electric instrument 100 by acquiring the power activation information from electric instrument 100, and thereby, may acquire the instrument information from electric instrument 100. Moreover, in the case where communication module 200 and electric instrument 100 have a common power source, and when the power source of electric instrument 100 is activated, communication module 200 is also activated, the instrument information may be acquired after activation end of communication module 200. Upon acquiring the instrument information from electric instrument 100, household electric appliance cooperation part 214 saves the instrument information in module storage 213.

Upon receiving the log from electric instrument 100, household electric appliance cooperation part 214 may save the received log in module storage 213 like a buffer.

Upon receiving an instrument registration request from terminal device 400 through module communicator 211, identification information transmitter 221 that is implemented as a processing part by module controller 212 reads out the instrument information from module storage 213, and transmits the instrument information to log acquisition device 300 through module communicator 211. Upon receiving registration completion information from log acquisition device 300, module controller 212 saves, in module storage 213, registered information indicating that instrument registration processing has been completed.

In the case where the registered information is held in module storage 213 when the power is activated in communication module 200, for example, when the power is activated together with electric instrument 100, identification information transmitter 221 transmits a power activation notification to log acquisition device 300 through module communicator 211. The power activation notification may include the instrument information saved in module storage 213.

Upon receiving notification setting information including a notification start time and a notification period from log acquisition device 300 through module communicator 211, notification setting information saving part 222 implemented as a processing part by module controller 212 causes module storage 213 to save the notification setting information therein. A plurality of pieces of notification setting information can be registered in module storage 213. In the present exemplary embodiment, the notification setting information further includes log specification information for specifying a type of the log to be notified. Here, in order not to register a plurality of identical pieces of notification setting information, if the notification setting information newly transmitted from log acquisition device 300 has already been registered in module storage 213, the notification setting information newly transmitted is not saved.

Determination as to whether the notification setting information newly transmitted is identical may be made in accordance with any one of the notification start time, the notification period, and the log specification information, or in combination of the foregoing, or may be made in accordance with peculiar information indicating the notification setting information, the peculiar information being added to the notification setting information. Note that the notification setting information newly transmitted may be overwritten and saved.

Log transmitter 223 implemented as a processing part by module controller 212 reads out the notification setting information from module storage 213, and calculates a notification time from the notification start time and the notification period. When the notification time is reached, module controller 212 creates the log notification request created beforehand, based on the notification setting information, and transmits the log notification request to household electric appliance cooperation part 214. The log notification request includes the log specification information, which is information indicating the type of the log to be notified.

Upon receiving the log notification request from module controller 212, household electric appliance cooperation part 214 transmits, to module controller 212, a response indicating whether or not the log to be transmitted is saved in module storage 213, based on the log specification information included in the log notification request. If the log to be transmitted is a log that has already been transmitted from electric instrument 100 and buffered in module storage 213, log transmitter 223 transmits the log read out from module storage 213 to log acquisition device 300 through module communicator 211. If the log to be transmitted is not saved in module storage 213, log transmitter 223 transmits the log notification request to electric instrument 100 through household electric appliance cooperation part 214, and sequentially transmits the log received from electric instrument 100 through household electric appliance cooperation part 214 to log acquisition device 300 through module communicator 211.

Upon receiving the synchronization signal from log acquisition device 300, time manager 216 performs time calibration to a time of communication module 200 so that communication module 200 is synchronized with log acquisition device 300, based on the synchronization signal. While timing when the time calibration is performed is not particularly limited, for example, when communication module 200 is activated, and the communication with log acquisition device 300 is established, the synchronization signal may be acquired and the time calibration may be performed. Moreover, the time calibration may be performed at periodical timing. In this case, module controller 212 transmits the synchronization signal request to log acquisition device 300 through module communicator 211 at the periodical timing.

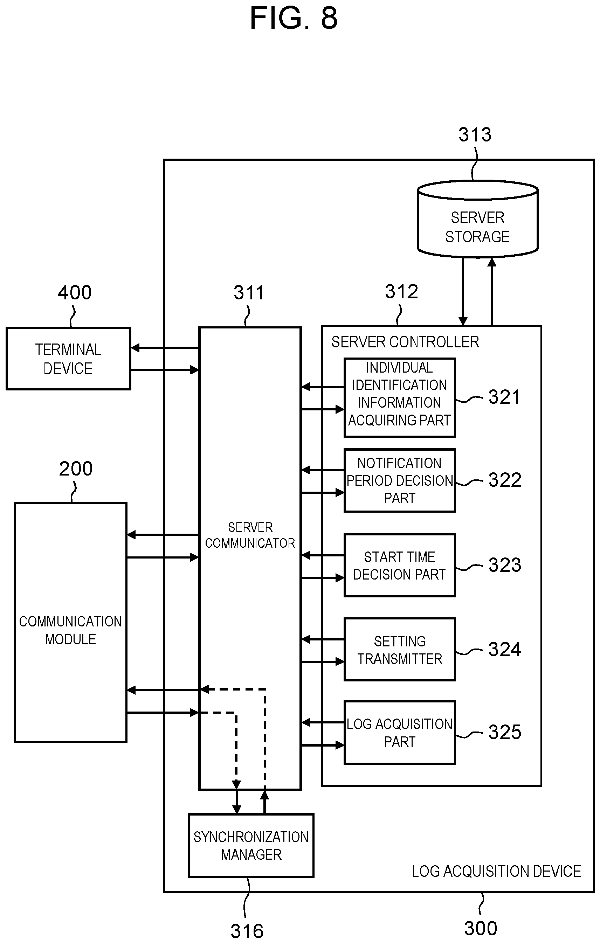

With reference to FIG. 8, the operation of each of the functional blocks in log acquisition device 300 will be described.

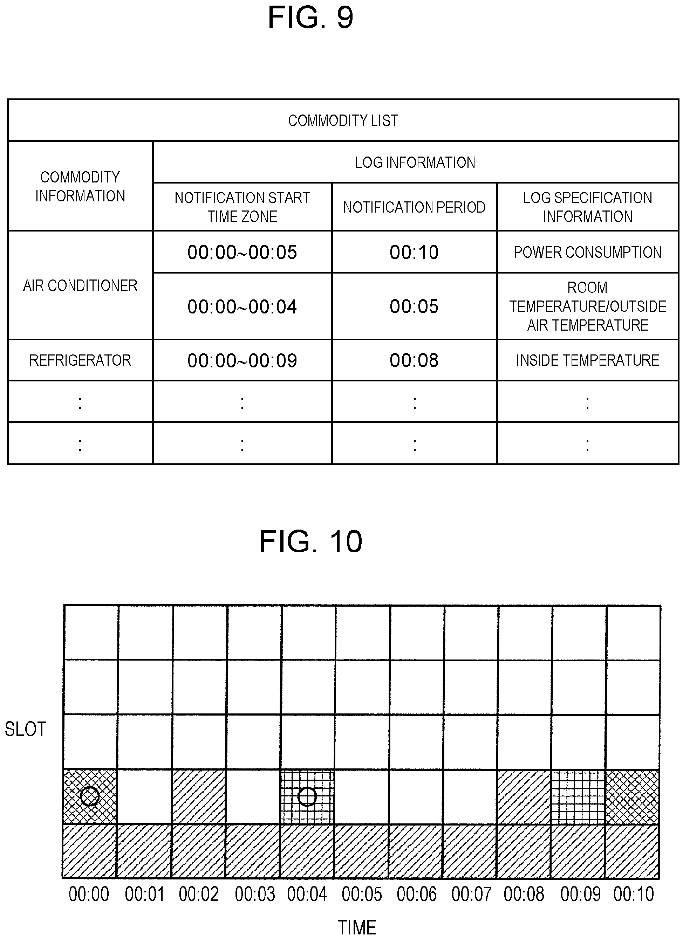

Log acquisition device 300 holds a commodity list in server storage 313. The commodity list is a list in which pieces of information relating to the log to be acquired are collected by commodity information, ad FIG. 9 shows an example of the commodity list. As shown in the same figure, in the commodity list, a notification start time zone and the notification period are associated with each other for each piece of log specification information linked to the commodity information. Note that the commodity list can be registered from terminal device 400 as well.

Individual identification information acquiring part 321 implemented as a processing part by server controller 312 receives the instrument information of electric instrument 100 from communication module 200 through server communicator 311 during instrument registration processing, and registers the instrument information in server storage 313.

Server controller 312 performs subsequent processing with electric instrument 100 as an object instrument, electric instrument 100 that has been subjected to the processing of instrument registration. Notification period decision part 322 implemented as a processing part by server controller 312 reads out the commodity list saved in server storage 313, and decides the notification period, which is a period when the log of the object instrument is notified, based on the commodity information included in the instrument information. If the commodity information included in the instrument information is an air conditioner, referring to the example in FIG. 9, log information corresponding to an air conditioner is two pieces of [00 : 00 - 00 : 05, period of 10 minutes, power consumption] and [00 : 00 - 00 : 04, period of 5 minutes, room temperature/outside air temperature]. Notification period decision part 322 decides the two different notification periods with respect to the object instrument, based on the commodity list read out. In FIG. 9, 00 : 10 and 00 : 05 are decided as the notification periods.

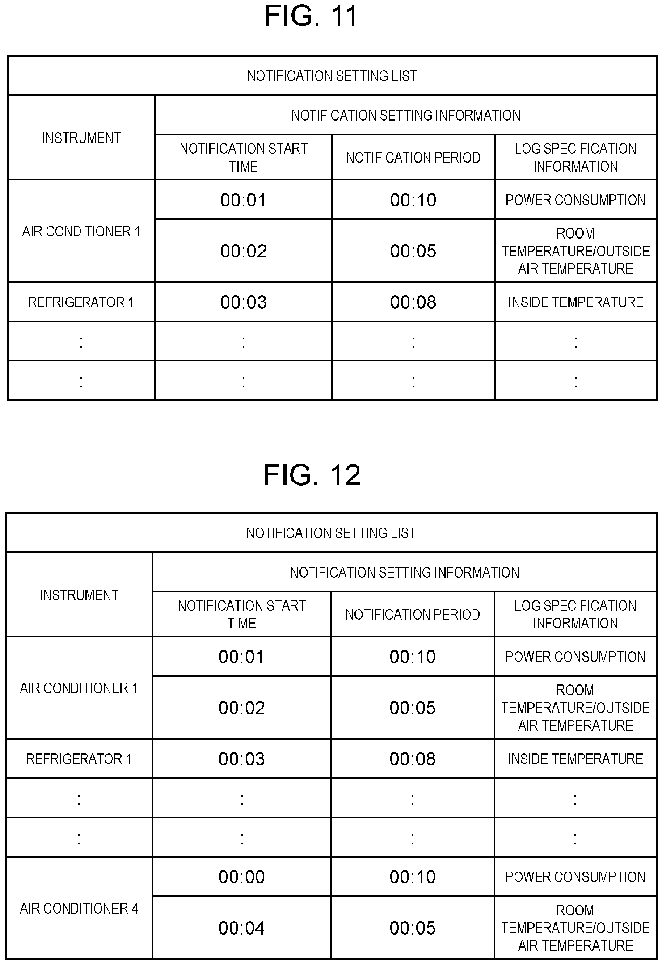

Upon receiving the notification period decided in notification period decision part 322, start time decision part 323 implemented as a processing part by server controller 312 reads out a notification setting list from server storage 313, the notification setting list being a table where the notification setting information is associated with each instrument (refer to FIG. 11). FIG. 10 is a diagram schematically showing distribution of transmission timing of the plurality of electric instruments calculated from the notification setting list. The transmission timing is a time calculated, based on the notification start time and the notification period, and timing when communication module 200 uploads the log. Taking, as an example, a case where start times to the notification periods 00 : 10 and 00 : 05 in an instrument (air conditioner 4) for which notification setting is newly created are decided, when oblique hatching shown in the same figure denotes transmission timing already decided, lattice hatching and oblique lattice hatching show newly decided transmission timing. The oblique lattice hatching denotes the transmission timing corresponding to the notification period 00 : 10, and the lattice hatching denotes the transmission timing corresponding to the notification period 00 : 05. Start time decision part 323 decides the notification start time (round mark in FIG. 10) so that the distribution of the transmission timing of the logs of the respective electric instruments is levelled, based on the notification period decided by notification period decision part 322 and the notification start times and the notification periods of the electric instruments already decided. Start time decision part 323 associates the decided notification start time and the notification period corresponding to this, and the instrument information to create the notification setting information. Start time decision part 323 adds the notification setting information newly created to the notification setting list and saves the resultant in server storage 313.

Note that start time decision part 323 may decide the start time within a range of the notification start time zone linked to the commodity information.

FIG. 11 shows the registered notification setting list, which has been saved in server storage 313, and FIG. 12 shows the notification setting list after the new notification setting information is added.

Setting transmitter 324 implemented as a processing part by server controller 312 transmits the notification setting information created in start time decision part 323 to communication module 200 connected to corresponding electric instrument 100, based on the instrument information included in the notification setting information through server communicator 311.

If the notification setting information corresponding to the received instrument information has already been stored, upon receiving the instrument information by the power activation notification from communication module 200, setting transmitter 324 reads out the notification setting information linked to the instrument information from server storage 313, and transmits the notification setting information to communication module 200.

Log acquisition part 325 implemented as a processing part by server controller 312 acquires the log transmitted from communication module 200 in accordance with the notification start time and the notification period included in the notification setting information, and saves the log in server storage 313. In the present exemplary embodiment, log acquisition part 325 sorts the log by the instrument information included in the log, and saves the log in server storage 313. The log may be transmitted to terminal device 400 through server communicator 311.

Synchronization manager 316 accepts the synchronization signal request from communication module 200 through server communicator 311. Upon accepting the synchronization signal request, a time held by log acquisition device 300 is transmitted as the synchronization signal to communication module 200 through server communicator 311.

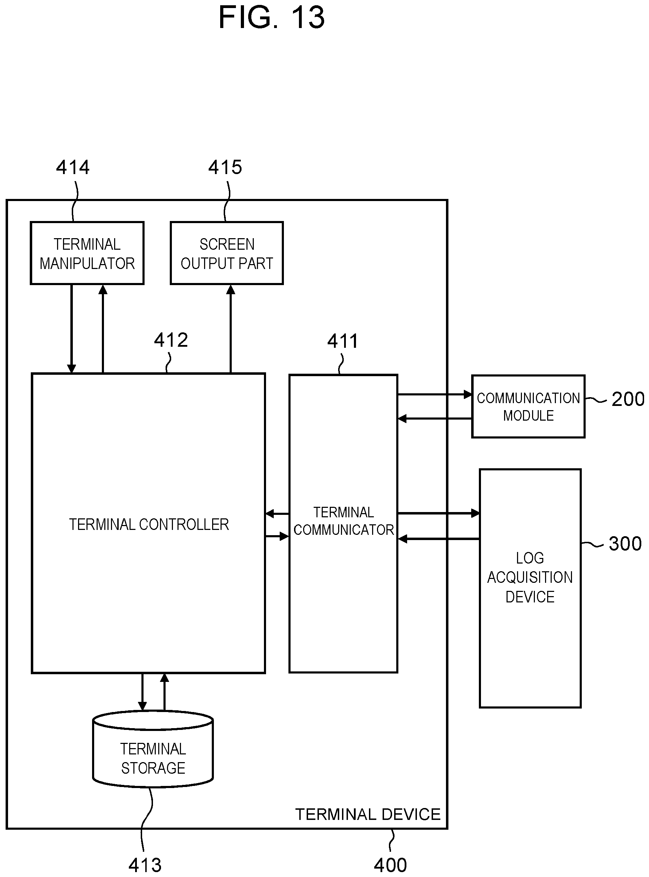

With reference to FIG. 13, operation of the respective functional blocks in terminal device 400 will be described.

When the manipulation of instrument registration by the user is sensed by terminal manipulator 414, instrument registration manipulation information is transmitted to terminal controller 412. When terminal controller 412 has the instrument registration manipulation information inputted, terminal controller 412 transmits the instrument registration request to communication module 200 through terminal communicator 411.

Terminal controller 412 can register the commodity list in log acquisition device 300 through terminal communicator 411 to add the commodity list. Moreover, when the log is received from log acquisition device 300 through terminal communicator 411, the log is saved in terminal storage 413.

Terminal controller 412 can analyze the log of terminal storage 413, and can display household electric appliance utilization information on the display through screen output part 415.

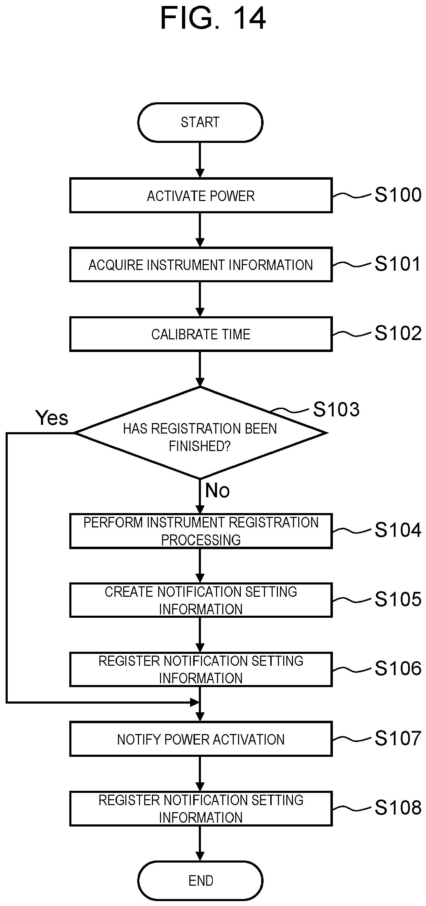

FIG. 14 is a flowchart for describing a log notification setting flow of log acquisition system 500 and terminal device 400, log acquisition system 500 including electric instrument 100, communication module 200, and log acquisition device 300 according to the exemplary embodiment. With reference to FIG. 14, operation of electric instrument 100, communication module 200, log acquisition device 300, and terminal device 400 will be described.

The user performs the manipulation for power activation to instrument manipulator 114, and thereby, instrument manipulator 114 senses the power activation and activates electric instrument 100. In the present exemplary embodiment, since a power source of communication module 200 is supplied from electric instrument 100, communication module 200 is also activated at the time (step S100).

When electric instrument 100 and communication module 200 are activated, household electric appliance cooperation part 214 acquires the instrument information from electric instrument 100 and registers the instrument information in module storage 213 (step S101).

When communication module 200 is activated, and the communication with log acquisition device 300 is established, time manager 216 performs the time calibration with synchronization manager 316 of log acquisition device 300 (step S102).

This allows the time to be synchronized between log acquisition device 300 and communication module 200, and can prevent shift of the time when the log is notified to log acquisition device 300 from communication module 200. Accordingly, since among the plurality of communication modules 200 connected to log acquisition device 300 through the network, the time is synchronized with the time of log acquisition device 300 as a standard, the time when each of communication modules 200 uploads the log does not shift, and a distribution effect of timing when the log is notified is not lost. Note that the time calibration may be periodically performed in place of performing the time calibration only once at the first time when communication module 200 is activated. For example, a case can be exemplified where the time calibration is performed once a day, that is, with a period of 24 hours. This is effective to a refrigerator in which in a long period, turning of the power from ON to OFF is not performed or the like.

After the time calibration, communication module 200 checks whether or not electric instrument 100 has already been registered in log acquisition device 300, based on the presence or absence of the registered information. If the registered information is held, it is determined that the instrument registration has been finished, and the instrument registration processing is not performed (S103: Yes). If the registration information is absent, communication module 200 performs the instrument registration processing (step S103: No).

When terminal manipulator 414 senses instrument registration manipulation by the user manipulation, terminal device 400 transmits the instrument registration request to communication module 200. Upon receiving the instrument registration request, communication module 200 performs the instrument registration processing. During the instrument registration processing, communication module 200 transmits the instrument information acquired in step 101 to log acquisition device 300, and log acquisition device 300 registers the instrument information transmitted from communication module 200 in server storage 313 (step S104).

When the instrument registration processing is completed, server controller 312 starts the creation of the notification setting information. Server controller 312 creates the notification setting information including the notification start time and the notification period, based on the commodity list held by server storage 313, and the acquired instrument information. At this time, the notification time is decided by start time decision part 323 so that the notifications are distributed (step S105).

When the notification setting information is created by server controller 312, the notification setting information is registered in server storage 313, and is transmitted to communication module 200. The notification setting information transmitted to communication module 200 is registered in module storage 213. At this time, if the notification setting information to be registered has already been registered, overlapping registration is not performed (step S106).

If in step S103, the instrument registration has already been finished, or after the registration processing of the notification setting information has been completed, communication module 200 transmits the power activation notification to notify log acquisition device 300 of the activation of the power (step S107).

Upon receiving the power activation notification from communication module 200, log acquisition device 300 checks whether or not the notification setting information linked to the instrument information has been registered in server storage 313 with reference to the instrument information included in the power activation notification. If the notification setting information has been registered, log acquisition device 300 reads out the notification setting information to transmit the notification setting information to communication module 200. The notification setting information transmitted to communication module 200 is registered in module storage 213. At this time, if the notification setting information to be registered has already been registered, overlapping registration is not performed (step S108).

Note that, if in step S103, the notification setting information has not been registered yet, the processing in steps S107, S108 may not be performed.

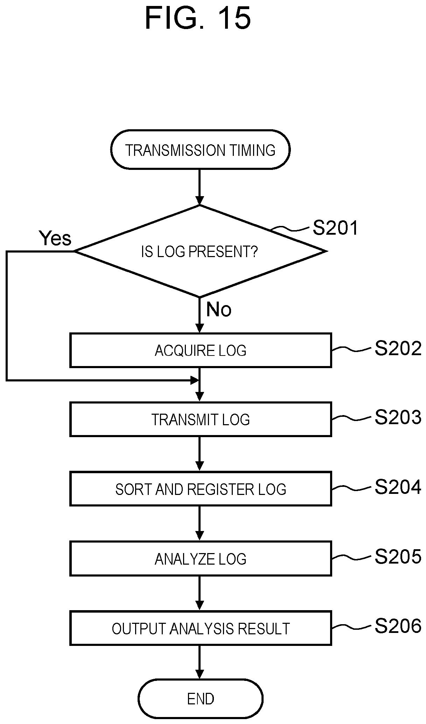

FIG. 15 is a flowchart for describing a transmission flow of the log by electric instrument 100, communication module 200, log acquisition device 300, and terminal device 400 according to the exemplary embodiment. With reference to FIG. 15, operation of electric instrument 100, communication module 200, log acquisition device 300, and terminal device 400 will be described.

When log transmitter 223 senses that the transmission timing is reached, based on the notification setting information registered in module storage 213, log transmitter 223 checks whether or not the log is buffered in module storage 213 (S201). If the log to be transmitted is buffered in module storage 213 (S201: Yes), the buffered log is transmitted by log transmitter 223 (S203). If the log is not buffered (S201: No), the log acquired from electric instrument 100 through household electric appliance cooperation part 214 (S202) is transmitted by log transmitter 223 (S203).

Upon receiving the log, log acquisition device 300 sorts the log in accordance with the commodity information included in the instrument information of a transmission source of the log, and registers the log in server storage 313 (S204). When requested from terminal device 400, the registered log is transmitted to terminal device 400 for analysis. An analysis result of the log is displayed on the display, for example, as the household electric appliance utilization information through screen output part 415 to be provided to the user (step S206).

According to log acquisition system 500 of the above-described exemplary embodiment, log acquisition device 300 levels the transmission timing within a predetermined time, the transmission timing being the times when communication modules 200 connected to the respective plurality of electric instruments 100 transmit the logs of the plurality of electric instruments 100. Log acquisition device 300 creates the notification setting information corresponding to each of electric instruments 100. Communication module 200 is caused to conform to this notification setting information. Accordingly, the transmission timing of the logs transmitted from the plurality of communication module 200 is distributed, and a load of processing of log acquisition device 300 is temporally distributed, and communication traffic is also temporally distributed.

Note that the present disclosure is not limited to the above-described exemplary embodiment. For example, another exemplary embodiment implemented by arbitrarily combining components described in the present specification, or by excluding some of the components may be an exemplary embodiment of the present disclosure.

For example, while the instrument information functioning as the individual identification information is formed of the commodity information and the individual identification number, the instrument information may be unique information not having any meaning such as the commodity information or the like. For example, it is information such as an address comforting to Internet Protocol Version 6 (IPv6). Moreover, in this case, the instrument information and the commodity information are associated with each other in at least one of log acquisition device 300 and terminal device 400.

Moreover, while the case where electric instruments 100 and communication modules 200 are connected in a one-to-one relationship has been described, the plurality of electric instruments 100 may be connected to one communication module 200.

The log acquisition system of the electric instrument according to the present disclosure may be mounted and used in a home relay device, and the present disclosure can be utilized in an electric instrument used in a store, a facility, an office, a factory, a vehicle or the like.

### REFERENCE MARKS IN THE DRAWINGS

- 100:: electric instrument
- 111:: instrument communicator
- 112:: instrument controller
- 113:: instrument storage
- 114:: instrument manipulator
- 200:: communication module
- 211:: module communicator
- 212:: module controller
- 213:: module storage
- 214:: household electric appliance cooperation part
- 216:: time manager
- 221:: identification information transmitter
- 222:: notification setting information saving part
- 223:: log transmitter
- 300:: log acquisition device
- 311:: server communicator
- 312:: server controller
- 313:: server storage
- 316:: synchronization manager
- 321:: individual identification information acquiring part
- 322:: notification period decision part
- 323:: start time decision part
- 324:: setting transmitter
- 325:: log acquisition part
- 400:: terminal device
- 411:: terminal communicator
- 412:: terminal controller
- 413:: terminal storage
- 414:: terminal manipulator
- 415:: screen output part
- 500:: log acquisition system
- 510:: network

## Claims

1. A log acquisition device that is connected to a plurality of electric instruments (100) through a network (510), and acquires logs of the electric instruments (100), the log acquisition device comprising:
an individual identification information acquiring part (321) that acquires individual identification information for identifying an individual of an object instrument as any one of the plurality of electric instruments (100);
a notification period decision part (322) that decides a notification period as a period when each of the logs of the object instrument is notified, based on commodity information associated with the individual identification information;
a start time decision part (323) that decides a notification start time as information indicating a time when a notification of the log of the object instrument starts so that transmission timing of the logs of the respective electric instruments (100) is levelled, based on the notification period, and the notification start time and the notification period of the electric instrument (100) already decided;
a setting transmitter (324) that transmits notification setting information including the notification start time decided and the notification period decided, based on the individual identification information; and
a log acquisition part (325) that acquires the log of the electric instrument (100) to be notified in accordance with the notification start time and the notification period included in the notification setting information.

2. The log acquisition device according to claim 1,
wherein the notification period decision part (322) decides a different plurality of the notification periods with respect to the object instrument,
the start time decision part (323) decides the notification start time corresponding to each of the plurality of notification periods decided, and
the setting transmitter (324) transmits the notification setting information including the plurality of notification periods decided and the notification start times decided.

3. The log acquisition device according to claim 1 or claim 2, further comprising a synchronization signal transmitter that transmits a synchronization signal for synchronizing the transmission timing of the logs of the electric instruments (100).

4. A communication module that is connected to a log acquisition device (300) according to any one of clams 1 to 3 through a network (510), and is capable of communicating with an electric instrument (100), the communication module comprising:
an identification information transmitter (221) that transmits individual identification information to the log acquisition device (300), the individual identification information being for identifying an individual of the electric instrument (100);
a notification setting information saving part (222) that causes a storage to save notification setting information including a notification start time and a notification period as decided and transmitted by the log acquisition device (300); and
a log transmitter (223) that transmits a log acquired from the electric instrument (100) to the log acquisition device (300) at a notification time corresponding to the notification start time and the notification period included in the notification setting information saved in the storage by the notification setting information saving part (222).

5. The communication module according to claim 4, wherein the identification information transmitter (221) transmits the individual identification information, based on information of power activation of the electric instrument (100).

6. A log acquisition system comprising a log acquisition device (300), a communication module (200) connected to the log acquisition device (300) through a network (510), and an electric instrument (100) capable of communicating with the communication module (200),
wherein the communication module (200) includes an identification information transmitter (221) that transmits individual identification information to the log acquisition device (300), the individual identification information being for identifying an individual of the electric instrument (100),
the log acquisition device (300) includes:
an individual identification information acquiring part (321) that acquires individual identification information for identifying an individual of an object instrument as any one of a plurality of the electric instruments (100);
a notification period decision part (322) that decides a notification period that is a period when a log of the object instrument is notified, based on commodity information associated with the individual identification information;
a start time decision part (323) that decides a notification start time as information indicating a time when a notification of the log of the object instrument starts so that transmission timing of a plurality of the logs of the respective electric instruments (100) is levelled, based on the notification period, and the notification start time and the notification period of the electric instrument (100) already decided; and
a setting transmitter (324) that transmits notification setting information including the notification start time decided and the notification period decided, based on the individual identification information,
the communication module (200) includes:
a notification setting information saving part (222) that causes a storage to save the notification setting information transmitted by the log acquisition device (300); and
a log transmitter (223) that transmits a log acquired from the electric instrument (100) to the log acquisition device (300) at a notification time corresponding to the notification start time and the notification period included in the notification setting information saved in the storage by the notification setting information saving part (222), and
the log acquisition device (300) includes a log acquisition part (325) that acquires the log of the electric instrument (100) to be notified in accordance with the notification start time and the notification period included in the notification setting information.

7. A log acquisition method in a log acquisition system (500) including a log acquisition device (300), a communication module (200) connected to the log acquisition device (300) through a network (510), and an electric instrument (100) capable of communicating with the communication module (200),
wherein an identification information transmitter (221) of the communication module (200) transmits individual identification information to the log acquisition device (300), the individual identification information being for identifying an individual of the electric instrument (100),
an individual identification information acquiring part (321) of the log acquisition device (300) acquires individual identification information for identifying an individual of an object instrument as any one of a plurality of the electric instruments (100),
a notification period decision part (322) decides a notification period as a period when a log of the object instrument is notified, based on commodity information associated with the individual identification information,
a start time decision part (323) decides a notification start time as information indicating a time when a notification of the log of the object instrument starts so that transmission timing of a plurality of the logs of the respective electric instruments (100) is levelled, based on the notification period, and the notification start time and the notification period of the electric instrument (100) already decided,
a setting transmitter (324) transmits notification setting information including the notification start time decided and the notification period decided, based on the individual identification information,
a notification setting information saving part (222) of the communication module (200) causes a storage to save the notification setting information transmitted from the log acquisition device (300),
a log transmitter (223) transmits the log acquired from the electric instrument (100) to the log acquisition device (300) at a log notification time corresponding to the notification start time and the notification period included in the notification setting information saved in the storage by the notification setting information saving part (222), and
a log acquisition part (325) of the log acquisition device (300) acquires the log of the electric instrument (100) to be notified in accordance with the notification start time and the notification period included in the notification setting information.

## Patentansprüche

1. Protokollerhaltungsvorrichtung, die mit einer Vielzahl von elektrischen Instrumenten (100) über ein Netzwerk (510) verbunden ist und Protokolle der elektrischen Instrumente (100) erhält, wobei die Protokollerhaltungsvorrichtung umfasst:
einen Individuelle-Identifikationsinformationen-Erhaltungsteil (321), der individuelle Identifikationsinformationen für das Identifizieren eines individuellen Objektinstruments als eines aus der Vielzahl von elektrischen Instrumenten (100) erhält,
einen Bekanntgabeperiode-Bestimmungsteil (322), der eine Bekanntgabeperiode als eine Periode für das Bekanntgeben der Protokolle des Objektinstruments basierend auf mit den einzelnen Identifikationsinformationen assoziierten Güterinformationen bestimmt,
einen Startzeit-Bestimmungsteil (323), der eine Bekanntgabestartzeit als Informationen, die die Startzeit einer Bekanntgabe des Protokolls des Objektinstruments angeben, sodass die Sendezeiten der Protokolle der entsprechenden elektrischen Instrumente (100) ausgeglichen werden, basierend auf der Bekanntgabeperiode sowie auf der Bekanntgabestartzeit und der Bekanntgabeperiode des elektrischen Instruments (100), die bereits bestimmt wurden, bestimmt,
einen Einstellungen-Sender (324), der Bekanntgabeeinstellungsinformationen einschließlich der bestimmten Bekanntgabestartzeit und der bestimmten Bekanntgabeperiode basierend auf den individuellen Identifikationsinformationen sendet, und
einen Protokollerhaltungsteil (325), der das bekanntzugebende Protokoll des elektrischen Instruments (100) in Entsprechung zu der Bekanntgabestartzeit und der Bekanntgabeperiode in den Bekanntgabeeinstellungsinformationen erhält.

2. Protokollerhaltungsvorrichtung nach Anspruch 1, wobei:
der Bekanntgabeperiode-Bestimmungsteil (322) eine verschiedene Vielzahl der Bekanntgabeperioden in Bezug auf das Objektinstrument bestimmt,
der Startzeit-Bestimmungsteil (323) die Bekanntgabestartzeit in Entsprechung zu jeder aus der Vielzahl von bestimmten Bekanntgabeperioden bestimmt, und
der Einstellungen-Sender (324) die Bekanntgabeeinstellungsinformationen einschließlich der bestimmten Vielzahl von Bekanntgabeperioden und der bestimmten Bekanntgabestartzeiten sendet.

3. Protokollerhaltungsvorrichtung nach Anspruch 1 oder 2, die weiterhin einen Synchronisationssignalsender umfasst, der ein Synchronisationssignal für das Synchronisieren der Sendezeit der Protokolle der elektrischen Instrumente (100) sendet.

4. Kommunikationsmodul, das mit einer Protokollerhaltungsvorrichtung (300) gemäß einem der Ansprüche 1 bis 3 über ein Netzwerk (510) verbunden ist und befähigt ist zum Kommunizieren mit einem elektrischen Instrument (100), wobei das Kommunikationsmodul umfasst:
einen Identifikationsinformationen-Sender (221), der individuelle Identifikationsinformationen an die Protokollerhaltungsvorrichtung (300) sendet, wobei die individuellen Identifikationsinformationen für das Identifizieren eines individuellen elektrischen Instruments (100) dienen,
einen Bekanntgabeeinstellungsinformationen-Speicherteil (222), der einen Speicher veranlasst zum Speichern von Bekanntgabeeinstellungsinformationen einschließlich einer Bekanntgabestartzeit und einer Bekanntgabeperiode wie durch die Protokollerhaltungsvorrichtung (300) bestimmt und gesendet, und
einen Protokoll-Sender (223), der ein von dem elektrischen Instrument (100) erhaltenes Protokoll an die Protokollerhaltungsvorrichtung (300) zu einer Bekanntgabezeit in Entsprechung zu der Bekanntgabestartzeit und der Bekanntgabeperiode in den Bekanntgabeeinstellungsinformationen, die in dem Speicher durch den Bekanntgabeeinstellungsinformationen-Speicherteil (222) gespeichert wurden, sendet.

5. Kommunikationsmodul nach Anspruch 4, wobei der Identifikationsinformationen-Sender (221) die individuellen Identifikationsinformationen basierend auf Informationen zu einer Leistungsaktivierung des elektrischen Instruments (100) sendet.

6. Protokollerhaltungssystem, das eine Protokollerhaltungsvorrichtung (300), ein Kommunikationsmodul (200), das mit der Protokollerhaltungsvorrichtung (300) über ein Netzwerk (510) verbunden ist, und ein elektrisches Instrument (100), das für ein Kommunizieren mit dem Kommunikationsmodul (200) befähigt ist, umfasst,
wobei das Kommunikationsmodul (200) einen Identifikationsinformationen-Sender (221), der individuelle Identifikationsinformationen an die Protokollerhaltungsvorrichtung (300) sendet, enthält, wobei die individuellen Identifikationsinformationen für das Identifizieren eines individuellen elektrischen Instruments (100) dienen,
wobei die Protokollerhaltungsvorrichtung (300) umfasst:
einen Individuelle-Identifikationsinformationen-Erhaltungsteil (321), der individuelle Identifikationsinformationen für das Identifizieren eines individuellen Objektinstruments als eines aus der Vielzahl von elektrischen Instrumenten (100) erhält,
einen Bekanntgabeperiode-Bestimmungsteil (322), der eine Bekanntgabeperiode als eine Periode für das Bekanntgeben eines Protokolls des Objektinstruments basierend auf mit den einzelnen Identifikationsinformationen assoziierten Güterinformationen bestimmt,
einen Startzeit-Bestimmungsteil (323), der eine Bekanntgabestartzeit als Informationen, die die Startzeit einer Bekanntgabe des Protokolls des Objektinstruments angeben, sodass die Sendezeiten einer Vielzahl der Protokolle der entsprechenden elektrischen Instrumente (100) ausgeglichen werden, basierend auf der Bekanntgabeperiode sowie auf der Bekanntgabestartzeit und der Bekanntgabeperiode des elektrischen Instruments (100), die bereits bestimmt wurden, bestimmt, und
einen Einstellungen-Sender (324), der Bekanntgabeeinstellungsinformationen einschließlich der bestimmten Bekanntgabestartzeit und der bestimmten Bekanntgabeperiode basierend auf den individuellen Identifikationsinformationen sendet, und
wobei das Kommunikationsmodul (200) umfasst:
einen Bekanntgabeeinstellungsinformationen-Speicherteil (222), der einen Speicher veranlasst zum Speichern der durch die Protokollerhaltungsvorrichtung (300) gesendeten Bekanntgabeeinstellungsinformationen, und
einen Protokoll-Sender (223), der ein von dem elektrischen Instrument (100) erhaltenes Protokoll an die Protokollerhaltungsvorrichtung (300) zu einer Bekanntgabezeit in Entsprechung zu der Bekanntgabestartzeit und der Bekanntgabeperiode in den Bekanntgabeeinstellungsinformationen, die in dem Speicher durch den Bekanntgabeeinstellungsinformationen-Speicherteil (222) gespeichert wurden, sendet,
wobei die Protokollerhaltungsvorrichtung (300) einen Protokollerhaltungsteil (325) enthält, der das bekanntzugebende Protokoll des elektrischen Instruments (100) in Entsprechung zu der Bekanntgabestartzeit und der Bekanntgabeperiode in den Bekanntgabeeinstellungsinformationen erhält.

7. Protokollerhaltungsverfahren in einem Protokollerhaltungssystem (500), das eine Protokollerhaltungsvorrichtung (300), ein Kommunikationsmodul (200), das mit der Protokollerhaltungsvorrichtung (300) über ein Netzwerk (510) verbunden ist, und ein elektrisches Instrument (100), das für ein Kommunizieren mit dem Kommunikationsmodul (200) befähigt ist, umfasst,
wobei ein Identifikationsinformationen-Sender (221) des Kommunikationsmoduls (200) individuelle Identifikationsinformationen an die Protokollerhaltungsvorrichtung (300) sendet, wobei die individuellen Identifikationsinformationen für das Identifizieren eines individuellen elektrischen Instruments (100) dienen,
wobei ein Individuelle-Identifikationsinformationen-Erhaltungsteil (321) der Protokollerhaltungsvorrichtung (300) individuelle Identifikationsinformationen für das Identifizieren eines individuellen Objektinstruments als eines aus der Vielzahl von elektrischen Instrumenten (100) erhält,
wobei ein Bekanntgabeperiode-Bestimmungsteil (322) eine Bekanntgabeperiode als eine Periode für das Bekanntgeben eines Protokolls des Objektinstruments basierend auf mit den einzelnen Identifikationsinformationen assoziierten Güterinformationen bestimmt,
wobei ein Startzeit-Bestimmungsteil (323) eine Bekanntgabestartzeit als Informationen, die die Startzeit einer Bekanntgabe des Protokolls des Objektinstruments angeben, sodass die Sendezeiten einer Vielzahl der Protokolle der entsprechenden elektrischen Instrumente (100) ausgeglichen werden, basierend auf der Bekanntgabeperiode sowie auf der Bekanntgabestartzeit und der Bekanntgabeperiode des elektrischen Instruments (100), die bereits bestimmt wurden, bestimmt,
wobei ein Einstellungen-Sender (324) Bekanntgabeeinstellungsinformationen einschließlich der bestimmten Bekanntgabestartzeit und der bestimmten Bekanntgabeperiode basierend auf den individuellen Identifikationsinformationen sendet,
wobei ein Bekanntgabeeinstellungsinformationen-Speicherteil (222) des Kommunikationsmoduls (200) einen Speicher veranlasst zum Speichern der von der Protokollerhaltungsvorrichtung (300) gesendeten Bekanntgabeeinstellungsinformationen,
wobei ein Protokoll-Sender (223) ein von dem elektrischen Instrument (100) erhaltenes Protokoll an die Protokollerhaltungsvorrichtung (300) zu einer Bekanntgabezeit in Entsprechung zu der Bekanntgabestartzeit und der Bekanntgabeperiode in den Bekanntgabeeinstellungsinformationen, die in dem Speicher durch den Bekanntgabeeinstellungsinformationen-Speicherteil (222) gespeichert wurden, sendet, und
wobei ein Protokollerhaltungsteil (325) der Protokollerhaltungsvorrichtung (300) das bekanntzugebende Protokoll des elektrischen Instruments (100) in Entsprechung zu der Bekanntgabestartzeit und der Bekanntgabeperiode in den Bekanntgabeeinstellungsinformationen erhält.

## Revendications

1. Dispositif d'acquisition de journal qui est connecté à une pluralité d'instruments électriques (100) par un réseau (510), et acquiert des journaux des instruments électriques (100), le dispositif d'acquisition de journal comprenant :
une partie d'acquisition d'informations d'identification d'individu (321) qui acquiert des informations d'identification d'individu pour identifier un individu d'un instrument objet en tant que l'un quelconque de la pluralité d'instruments électriques (100) ;
une partie de détermination de période de notification (322) qui détermine une période de notification en tant que période pendant laquelle chacun des journaux de l'instrument objet est notifié, sur la base d'informations de marchandise associées aux informations d'identification d'individu ;
une partie de détermination d'heure de début (323) qui détermine une heure de début de notification en tant qu'informations indiquant une heure à laquelle une notification du journal de l'instrument objet commence de sorte qu'une temporisation de transmission des journaux des instruments électriques (100) respectifs soit égalisée, sur la base de la période de notification, et l'heure de début de notification et la période de notification de l'instrument électrique (100) étant déjà déterminées ;
un émetteur de réglage (324) qui transmet des informations de réglage de notification comportant l'heure de début de notification déterminée et la période de notification déterminée, sur la base des informations d'identification d'individu ; et
une partie d'acquisition de journal (325) qui acquiert le journal de l'instrument électrique (100) à notifier conformément à l'heure de début de notification et à la période de notification incluses dans les informations de réglage de notification.

2. Dispositif d'acquisition de journal selon la revendication 1,
dans lequel la partie de détermination de période de notification (322) détermine une pluralité de périodes de notification différente par rapport à l'instrument objet,
la partie de détermination d'heure de début (323) détermine l'heure de début de notification correspondant à chacune de la pluralité de périodes de notification déterminées, et
l'émetteur de réglage (324) transmet les informations de réglage de notification comportant la pluralité de périodes de notification déterminées et les heures de début de notification déterminées.

3. Dispositif d'acquisition de journal selon la revendication 1 ou la revendication 2, comprenant en outre un émetteur de signal de synchronisation qui transmet un signal de synchronisation pour synchroniser la temporisation de transmission des journaux des instruments électriques (100).

4. Module de communication qui est connecté à un dispositif d'acquisition de journal (300) selon l'une quelconque des revendications 1 à 3 par un réseau (510), et est capable de communiquer avec un instrument électrique (100), le module de communication comprenant :
un émetteur d'informations d'identification (221) qui transmet des informations d'identification d'individu au dispositif d'acquisition de journal (300), les informations d'identification d'individu étant destinées à identifier un individu de l'instrument électrique (100) ;
une partie de sauvegarde d'informations de réglage de notification (222) qui amène une mémoire à sauvegarder des informations de réglage de notification comportant une heure de début de notification et une période de notification telles que déterminées et transmises par le dispositif d'acquisition de journal (300) ; et
un émetteur de journal (223) qui transmet un journal acquis à partir de l'instrument électrique (100) au dispositif d'acquisition de journal (300) à une heure de notification correspondant à l'heure de début de notification et à la période de notification incluses dans les informations de réglage de notification sauvegardées dans la mémoire par la partie de sauvegarde d'informations de réglage de notification (222).

5. Module de communication selon la revendication 4, dans lequel l'émetteur d'informations d'identification (221) transmet les informations d'identification d'individu, sur la base d'informations d'activation d'alimentation de l'instrument électrique (100).

6. Système d'acquisition de journal comprenant un dispositif d'acquisition de journal (300), un module de communication (200) connecté au dispositif d'acquisition de journal (300) par un réseau (510), et un instrument électrique (100) capable de communiquer avec le module de communication (200),
dans lequel le module de communication (200) comporte un émetteur d'informations d'identification (221) qui transmet des informations d'identification d'individu au dispositif d'acquisition de journal (300), les informations d'identification d'individu étant destinées à identifier un individu de l'instrument électrique (100),
le dispositif d'acquisition de journal (300) comporte :
une partie d'acquisition d'informations d'identification d'individu (321) qui acquiert des informations d'identification d'individu pour identifier un individu d'un instrument objet en tant que l'un quelconque d'une pluralité d'instruments électriques (100) ;
une partie de détermination de période de notification (322) qui détermine une période de notification qui est une période pendant laquelle un journal de l'instrument objet est notifié, sur la base d'informations de marchandise associées aux informations d'identification d'individu ;
une partie de détermination d'heure de début (323) qui détermine une heure de début de notification en tant qu'informations indiquant une heure à laquelle une notification du journal de l'instrument objet commence de sorte qu'une temporisation de transmission d'une pluralité de journaux des instruments électriques (100) respectifs soit égalisée, sur la base de la période de notification, et l'heure de début de notification et la période de notification de l'instrument électrique (100) étant déjà déterminées ; et
un émetteur de réglage (324) qui transmet des informations de réglage de notification comportant l'heure de début de notification déterminée et la période de notification déterminée, sur la base des informations d'identification d'individu,
le module de communication (200) comporte :
une partie de sauvegarde d'informations de réglage de notification (222) qui amène une mémoire à sauvegarder les informations de réglage de notification transmises par le dispositif d'acquisition de journal (300) ; et
un émetteur de journal (223) qui transmet un journal acquis à partir de l'instrument électrique (100) au dispositif d'acquisition de journal (300) à une heure de notification correspondant à l'heure de début de notification et à la période de notification incluses dans les informations de réglage de notification sauvegardées dans la mémoire par la partie de sauvegarde d'informations de réglage de notification (222), et
le dispositif d'acquisition de journal (300) comporte une partie d'acquisition de journal (325) qui acquiert le journal de l'instrument électrique (100) à notifier conformément à l'heure de début de notification et à la période de notification incluses dans les informations de réglage de notification.

7. Procédé d'acquisition de journal dans un système d'acquisition de journal (500) comportant un dispositif d'acquisition de journal (300), un module de communication (200) connecté au dispositif d'acquisition de journal (300) par un réseau (510), et un instrument électrique (100) capable de communiquer avec le module de communication (200),
dans lequel un émetteur d'informations d'identification (221) du module de communication (200) transmet des informations d'identification d'individu au dispositif d'acquisition de journal (300), les informations d'identification d'individu étant destinées à identifier un individu de l'instrument électrique (100),
une partie d'acquisition d'informations d'identification d'individu (321) du dispositif d'acquisition de journal (300) acquiert des informations d'identification d'individu pour identifier un individu d'un instrument objet en tant que l'un quelconque d'une pluralité d'instruments électriques (100),
une partie de détermination de période de notification (322) détermine une période de notification en tant que période pendant laquelle un journal de l'instrument objet est notifié, sur la base d'informations de marchandise associées aux informations d'identification d'individu,
une partie de détermination d'heure de début (323) détermine une heure de début de notification en tant qu'informations indiquant une heure à laquelle une notification du journal de l'instrument objet commence de sorte qu'une temporisation de transmission d'une pluralité de journaux des instruments électriques (100) respectifs soit égalisée, sur la base de la période de notification, et l'heure de début de notification et la période de notification de l'instrument électrique (100) étant déjà déterminées,
un émetteur de réglage (324) transmet des informations de réglage de notification comportant l'heure de début de notification déterminée et la période de notification déterminée, sur la base des informations d'identification d'individu,
une partie de sauvegarde d'informations de réglage de notification (222) du module de communication (200) amène une mémoire à sauvegarder les informations de réglage de notification transmises à partir du dispositif d'acquisition de journal (300),
un émetteur de journal (223) transmet le journal acquis à partir de l'instrument électrique (100) au dispositif d'acquisition de journal (300) à une heure de notification de journal correspondant à l'heure de début de notification et à la période de notification incluses dans les informations de réglage de notification sauvegardées dans la mémoire par la partie de sauvegarde d'informations de réglage de notification (222), et
une partie d'acquisition de journal (325) du dispositif d'acquisition de journal (300) acquiert le journal de l'instrument électrique (100) à notifier conformément à l'heure de début de notification et à la période de notification incluses dans les informations de réglage de notification.
